# EUROPEAN PATENT SPECIFICATION

(11) **EP 4 261 057 B1**
(45) Date of publication and mention of the grant of the patent: **11.06.2025**
(21) Application number: 22167789.1
(22) Date of filing: 12.04.2022
(51) Int. Cl.: B60G 11/04, F16F 1/18, F16F 1/26

(54) **A LEAF SPRING FOR USE IN A VEHICLE SUSPENSION**
BLATTFEDER ZUR VERWENDUNG IN EINER FAHRZEUGAUFHÄNGUNG
RESSORT À LAME DESTINÉ À ÊTRE UTILISÉ DANS UNE SUSPENSION DE VÉHICULE

(43) Date of publication of application: 18.10.2023
(73) Proprietor: VOLVO TRUCK CORPORATION, 405 08 Göteborg (SE)
(72) Inventor: LÖFGREN, Jonas, 416 78 Göteborg (SE); PREIJERT, Stefan, 415 07 Göteborg (SE)
(74) Representative: Zacco Sweden AB

(56) References cited:
- WO-A1-2013/095206
- CN-U- 209 776 070
- DE-A1- 102014 202 581
- DE-A1- 102018 202 750
- FR-A- 716 692
- JP-A- 2003 237 335
- JP-U- S5 370 016
- US-A- 3 685 812
- US-B2- 11 001 113

## Description

### TECHNICAL FIELD

The present disclosure relates to a leaf spring for use in a vehicle suspension. The present disclosure also relates to a vehicle suspension comprising such a leaf spring. Furthermore, the present disclosure relates to a vehicle comprising such a leaf spring or such a vehicle suspension.

The teachings of the present disclosure can be applied in heavy-duty vehicles, such as trucks, buses and construction equipment. Although the present disclosure will focus on a heavy-duty vehicle, the general inventive concept is not restricted to this particular vehicle, but may also be used in other vehicles such as cars.

### BACKGROUND

In vehicle suspensions where a rigid axle is located and controlled by leaf springs, many compromises have to be made. Such compromises can adversely reflect on the suspension performance under various loading conditions to which it is subjected during the operation of the vehicle. Examples of such loading condition is vehicle roll about the longitudinal roll centre which occurs when the vehicle is negotiating a bend or is subjected to forces induced by strong winds in the transverse direction. A further loading is termed "bump steer", which occurs when a wheel on one side of the vehicle is deflected upwards by an obstacle on the road surface.

Under such load conditions, the left and right wheel centres may become displaced relative to each other, resulting in large reaction forces between the leaf springs on the left side and the right side of the vehicle. In case of conventional U-shaped leaf springs, this will cause a twisting deformation of the axle and the leaf springs, and the deformation of the axle will displace the wheel centres in a way that reduces the desired understeer effect on the total steering.

US 8,967,645 B2 addresses the above problem by providing a vehicle suspension in which the leaf springs have a different configuration compared to the traditional U-shaped leaf springs. In US 8,967,645 B2 the leaf springs have convex portions extending towards the frame of the vehicle. Nevertheless, there is still room for improvement when it comes to handling characteristics.

The documents CN209776070 U, JPS5370016 U, US3685812 A, DE102014202581 A1, JP2003237335 A, FR716692 A, DE102018202750 A1, US11001113 B2, WO2013/095206 A1 disclose leaf springs for use in a vehicle. The document US3685812 A disclose the preamble of claim 1.

### SUMMARY

An object of the invention is to provide a leaf spring with improved handling characteristics. This and other objects, which will become apparent in the following discussion, are achieved by a leaf spring according to the accompanying independent claim. Some nonlimiting exemplary embodiments are presented in the dependent claims.

In vehicle suspensions, there is a term referred to as the "datum line". The datum line is an imaginary reference line between the front and rear leaf spring end eyes. A common design goal is to maximize the distance between the datum line and the intermediate portion of the leaf spring that is attached to the axle, since a large distance enables increased wheel motion, improved comfort and increased packaging space for an air spring.

However, the inventors have realized that with the prior art leaf springs the handling properties are compromised if said distance from the datum line is increased, because the wind-up centre will be at a too low level. The wind-up centre is the imaginary point on the leaf spring centre part standing relatively still during braking. The ball joint of the steering arm (attached to the steering knuckle) should desirable be located at the wind-up centre. However, if the wind-up centre is located at a too low level, then it is very difficult to find a steering arm that does not conflict with the axle. The inventors have unexpectedly realized that by providing a convex leaf spring portion on one side of the attachment to the axle and a concave leaf spring portion on the other side of the attachment to the axle, the wind-up centre can be provided at a high level (i.e. far from the ground) even though said distance to the datum line is increased compared to the distance that is practically possible in the prior art leaf springs. Hereby, improved handling characteristics are obtainable even with a large distance to the datum line.

According to a first aspect of the present disclosure, there is provided a leaf spring for use in a vehicle suspension, comprising:
- a lower surface configured to face downwardly towards the ground when used in a vehicle suspension,
- an upper surface which is located opposite to the lower surface and which is configured to face upwardly when used in a vehicle suspension,
- a first end,
- a second end,
   wherein the upper surface and the lower surface extend longitudinally from the first end to the second end,
- an axle attachment portion located between the first end and the second end, the axle attachment portion being configured to be attached to an axle such that the longitudinal extension of the upper and lower surface of the leaf spring is directed transversely to the axle,
- a first upwardly facing convex portion formed between the first end and the axle attachment portion,
- a second upwardly facing concave portion formed between the axle attachment portion and the second end.

By having a first upwardly facing convex portion formed between the first end and the axle attachment portion, in combination with a second upwardly facing concave portion formed between the axle attachment portion and the second end, the wind-up centre can be higher when the leaf spring is mounted as part of a vehicle suspension, even though the distance to the datum line is increased compared to the prior art vehicle suspensions. This allows for improved handling characteristics.

The leaf spring is intended to be mounted to a vehicle such that the first end is closer to the front of the vehicle, while the second end of the leaf spring is closer to the rear of the vehicle. Thus, the first end of the leaf spring may also be referred to as a front end, and the second end of the leaf spring may also be referred to as a rear end. In addition, as understood from above, the leaf spring also has an intended orientation relative to the ground when properly mounted. The lower surface is intended to face the ground, while the upper surface is intended to face away from the ground, when the leaf spring is properly mounted to the vehicle as part of a vehicle suspension. Suitably, the lower surface of the leaf spring may be in contact with the axle when the leaf spring is in its mounted position. From the above, it should thus also be understood that directional terms such as downwardly, lower, below, etc. are terms relative to the ground on which a vehicle stands. Thus, downwardly is in a direction towards the ground, while upwardly is in a direction away from the ground. Similarly, if a first component is located at a lower level than a second component, then the first component is located closer to the ground.

According to at least one exemplary embodiment, the axle attachment portion is the thickest portion of the leaf spring. This reduces the risk of undesirable stress in the axle attachment portion when the leaf spring forms part of a vehicle suspension subjected to loads. In at least some exemplary embodiments, the lower surface of the axle attachment portion of the leaf spring is planar in order to match a corresponding planar portion of the axle. Suitably, the first upwardly facing convex portion is void of any planar subportion. Similarly, the second upwardly facing concave portion is suitably void of any planar subportion. Thus, in at least some exemplary embodiments, the first upwardly facing convex portion extends in a continuous curved path from the axle attachment portion to the first end. Similarly, in at least some exemplary embodiments, the second upwardly facing concave portion extends in a continuous curved path from the axle attachment portion the second end.

According to at least one non-claimed example, the second upwardly facing concave portion extends upwardly from the axle attachment portion to the second end. This is advantageous as it allows the wind-up centre to be positioned higher compared to a flat or an upwardly facing convex rear portion of prior art leaf springs.

According to the invention, the second upwardly facing concave portion is formed by:
- a first subportion, which extends downwardly from the axle attachment portion to a lowest point of the second upwardly facing concave portion, and
- a second subportion which extends upwardly from said lowest point to the second end. This is advantageous as it allows the wind-up centre to be positioned higher compared to a flat or an upwardly facing convex rear portion of prior art leaf springs.

According to at least one exemplary embodiment, the second subportion has a steeper slope from said lowest point to the second end compared to the slope of the first subportion from the lowest point to the axel attachment portion.

Since the second subportion is configured to lean upwards in order for the leaf spring to get back to the datum line from said lowest point, it may advantageously be configured with a steep slope. By providing a steep slope of the second subportion a shorter offset is obtainable between the leaf spring end eye at the second end and the frame of the vehicle. This in turn allows a shackle, which is configured to engage the leaf spring eye, to be made smaller and therefore the bracket to which the shackle is attachable can be made lighter.

According to the invention, the extension of the second subportion forms a curved path from said lowest point to the second end, wherein the smallest radius of said curvature of the second subportion is smaller than any radius of curvature of the first subportion. This too provides the advantage of allowing for a smaller shackle and lighter bracket to be used in a vehicle suspension.

According to at least one exemplary embodiment, the first end comprises a first end eye and the second end comprises a second end eye, wherein the shortest distance between said first and second end eyes defines a geometrical datum line, wherein
- an intermediate point on the datum line is separated from the centre of the axle attachment portion by a distance C, which is the shortest distance between the centre of the axle attachment portion and the datum line,
- the first end eye is separated from said intermediate point by a predetermined first length A along said datum line,
- the second end eye is separated from said intermediate point by a predetermined second length B along said datum line.

According to at least one exemplary embodiment, the relationship between said distance C, said predetermined first length A, and said predetermined second length B is:
C > (A+B)/X where X is 80, suitably 30, more suitably 15.

By increasing the distance C, an increased wheel motion is enabled. Furthermore, driver comfort is improved and the packaging space for an optional air spring is increased. The above relationship may also be expressed as the distance (A+B) between the first and second eyes divided by said shortest distance (C) between the centre of the axle attachment portion and the datum line is less than 80, suitably less than 30, more suitably less than 15.

According to at least one exemplary embodiment, a first straight imaginary geometrical line is drawable between the end points of the first upwardly facing convex portion, from the first end to the axle attachment portion, wherein perpendicularly to the first straight imaginary geometrical line the largest distance a between the first straight imaginary geometrical line and the first upwardly facing convex portion is defined as *a* > A/Y where Y is 80, suitably 30, more suitably 20.

By configuring the first upwardly facing convex portion with a large distance a, positive handling characteristics are achievable. The distance a can be regarded as a measure of how much the first upwardly facing convex portion bulges upwardly.

According to at least one exemplary embodiment, a second straight imaginary geometrical line is drawable between the end points of the second upwardly facing concave portion, from the second end to the axle attachment portion, wherein perpendicularly to the second straight imaginary geometrical line the largest distance b between the second straight imaginary geometrical line and the second upwardly facing concave portion is defined as *b* > B/Z wherein Z is 80, suitably 30, more suitably 20. By configuring the second upwardly facing concave portion with a large distance b, positive handling characteristics are achievable. The distance b can be regarded as a measure of how much the second upwardly facing concave portion bulges downwardly.

The above discussed distances *a, b* and C have been found to result in an advantageous leaf spring when in use in a vehicle suspension of a vehicle. In particular, such a leaf spring having the geometry with the above discussed distances *a, b* and C reduces the reaction forces that deform the axle and the leaf spring of prior art vehicle suspensions. The present leaf spring provides axle steer effects which give a desirable understeering behaviour. Because of this advantageous effects, when the present leaf spring is used in a vehicle suspension there is no need for a large rear spring anchorage with large offset, thus saving both weight and cost, and additionally providing ample space for an optional auxiliary spring.

According to a second aspect of the present disclosure, there is provided a vehicle suspension comprising a leaf spring according to the first aspect, including any embodiment thereof.

The advantages of the vehicle suspension of the second aspect are largely analogous to the advantages of the leaf spring of the first aspect, including any embodiment thereof.

According to at least one exemplary embodiment, the vehicle suspension comprises:
- a first bracket configured to be attached rigidly to a vehicle frame at a first frame position,
- a second bracket configured to be attached rigidly to the vehicle frame at a second frame position,
- a shackle pivotally connected to the second bracket,
wherein the first end of the leaf spring is connected to the first bracket and the second end of the leaf spring is connected to the shackle in order to compensate for length changes of the leaf spring under load conditions.

Suitably the first frame position and the second frame position are, relative to each other, a front frame position and a rear frame position, respectively. Thus, the first bracket may in such case be referred to as a front bracket and the second bracket may be referred to as a rear bracket.

According to at least one exemplary embodiment, said leaf spring is a first leaf spring, the vehicle suspension further comprising:
- a second leaf spring according to the first aspect, including any embodiment thereof, and
- an axle configured to extend transversely of the vehicle frame, which axle is mounted to the two leaf springs at said axle attachment portion of the respective leaf spring.

The first and the second leaf springs may suitably have corresponding features.

It should be understood that the vehicle suspension may, in at least some exemplary, embodiments comprise a stack of first leaf springs at one end of the axle and a stack of second leaf springs at the other end of the axle, wherein the lowermost leaf spring in each stack is in contact with the axle.

According to a third aspect of the present disclosure, there is provided a vehicle comprising a leaf spring according to the first aspect (including any embodiment thereof) or a vehicle suspension according to the second aspect (including any embodiment thereof).

The advantages of the vehicle of the third aspect are largely analogous to the advantages of the leaf spring of the first aspect, including any embodiment thereof.

Generally, all terms used in the claims are to be interpreted according to their ordinary meaning in the technical field, unless explicitly defined otherwise herein. All references to "a/an/the portion, element, apparatus, component, arrangement, device, means, etc." are to be interpreted openly as referring to at least one instance of the portion, element, apparatus, component, arrangement, device, means, etc., unless explicitly stated otherwise. Further features of, and advantages with, the teachings of the present disclosure will become apparent when studying the appended claims and the following description. The skilled person realizes that different features of the present disclosure may be combined to create embodiments other than those described in the following, without departing from the scope of the present disclosure.

### BRIEF DESCRIPTION OF THE DRAWINGS

With reference to the appended drawings, below follows a more detailed description of embodiments of the invention cited as examples.

In the drawings:
Fig. 1 illustrates a vehicle according to at least one exemplary embodiment of the present disclosure.
Fig. 2 illustrates in a perspective view a vehicle suspension comprising two leaf springs in accordance with at least one exemplary embodiment.
Fig. 3 schematically illustrates a side or cross-sectional view of a leaf spring according to at least one exemplary embodiment, when mounted as part of a vehicle suspension.
Fig. 4 is a schematic comparison between the leaf spring in Fig. 3 and a conventional leaf spring.
Fig. 5 is a schematic diagram for the two leaf springs in Fig. 4, indicating the roll steer angle over axle roll angle for a vehicle subjected to vertical roll.
Fig. 6 is another schematic comparison between the leaf spring in Fig. 3 and a conventional leaf spring.
Fig. 7 shows an exemplary connection between a leaf spring and an axle.
Fig. 8 is a schematic comparison between a leaf spring according to a non-claimed example and a conventional leaf spring.

### DETAILED DESCRIPTION OF EXAMPLE EMBODIMENTS OF THE INVENTION

The general inventive concept will now be described more fully hereinafter with reference to the accompanying drawings, in which certain aspects are shown. The general inventive concept may, however, be embodied in many different forms and should not be construed as limited to the embodiments and aspects set forth herein; rather, the embodiments are provided by way of example so that this disclosure will be thorough and complete, and will fully convey the scope to those skilled in the art. Accordingly, it is to be understood that the present general inventive concept is not limited to the embodiments described herein and illustrated in the drawings; rather, the skilled person will recognize that many changes and modifications may be made within the scope of the appended claims. Like reference numerals refer to like elements throughout the description.

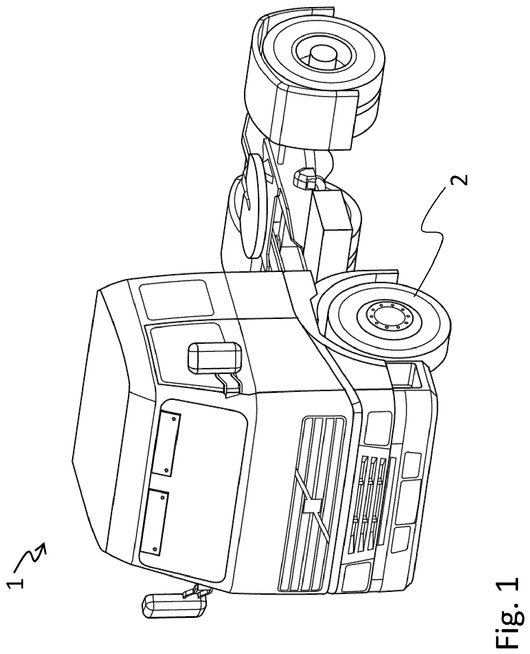

Fig. 1 illustrates a vehicle 1 according to at least one exemplary embodiment of the present disclosure. The exemplary illustration in Fig. 1 shows a heavy-duty vehicle 1. More specifically Fig. 1 shows a vehicle in the form of a tractor unit for towing a trailer unit (not shown), which together may make up a semitrailer vehicle. However, the teachings of the present disclosure are applicable to other types of vehicles as well. For instance, the vehicle may be a different type of vehicle for cargo transport, such as a truck, or a truck with a dolly unit arranged to tow a trailer unit, etc. Other exemplary vehicles include buses, construction equipment, and even passenger cars. The vehicle 1 may be operated by a driver or it may be an autonomous vehicle.

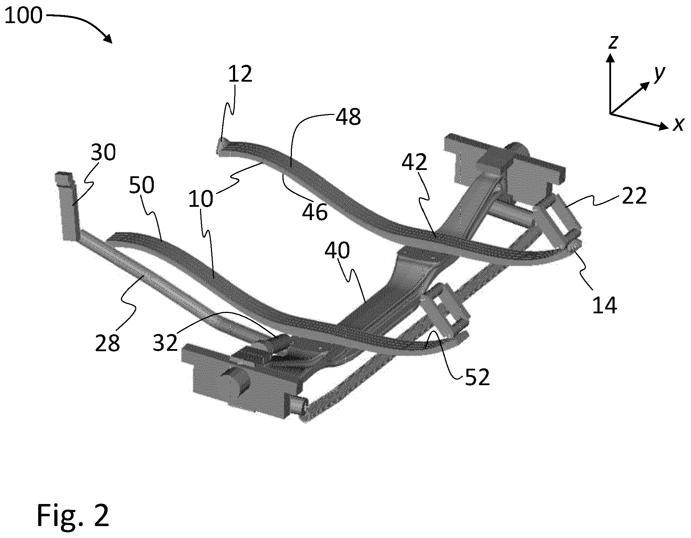

The illustrated vehicle 1 is supported on wheels 2, some of which are driven wheels. The front wheels 2 may suitably be steered wheels. The wheels 2, such as the wheels at the front axle, may be associated with a vehicle suspension in accordance with the teachings of this disclosure. Such a vehicle suspension may in its turn comprise a leaf spring in accordance with the teachings of this disclosure. Such a leaf spring will now be discussed in connection with Figs. 2-6.

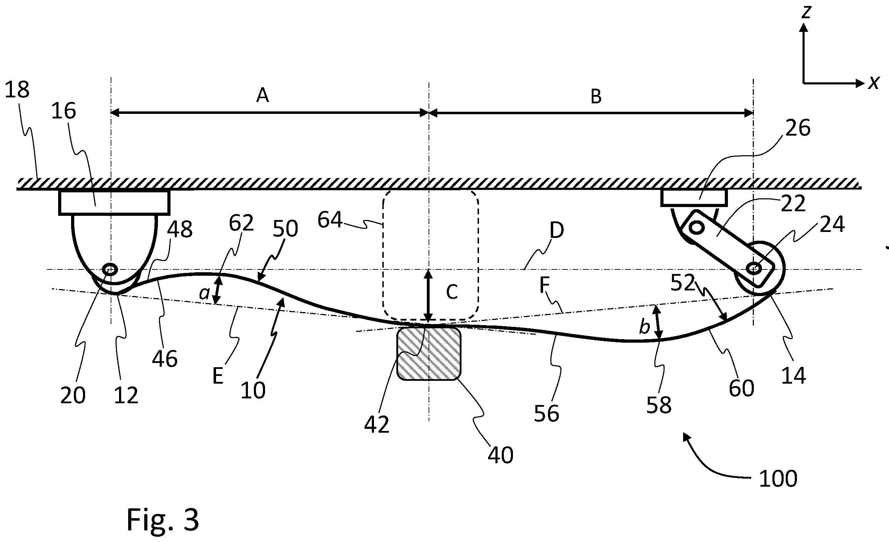

Fig. 2 illustrates in a perspective view a vehicle suspension 100 comprising two leaf springs 10 in accordance with at least one exemplary embodiment. Fig. 3 schematically illustrates a side or cross-sectional view of a leaf spring 10 according to at least one exemplary embodiment, when mounted as part of a vehicle suspension 100. The illustration in Fig. 3 may, for instance, show one of the leaf springs 10 in the vehicle suspension 100 of Fig. 2.

With reference to both Fig. 2 and Fig. 3, each leaf spring 10 has a first end 12 and a second end 14. The first end 12 is connected to a first bracket 16 configured to be attached rigidly to a vehicle frame 18 at a first frame position (see Fig. 3). More specifically, the first end 12 of the leaf spring 10 comprises a first end eye 20 for engaging with the first bracket 16. The second end 14 of each leaf spring 10 is connected to a shackle 22. More specifically, the second end 14 comprises a second end eye 24 for engaging with the shackle 22. The shackle 22 is pivotally connected to a second bracket 26 configured to be attached rigidly to the vehicle frame 18 at a second frame position (see Fig. 3). The connection between the second end 14 of the leaf spring 10 and the shackle 22 is made in order to compensate for length changes of the leaf spring 10 under load conditions. Fig. 2 also shows a drag link 28 which interconnects a pitman arm 30 with a steering arm 32 for controlling a steerable wheel (these components do not form part of the vehicle suspension 100 as such). It can therefore be understood that, in this example, the first end 12 is intended to be arranged forwardly of the second end 14. The first end 12 of each leaf spring 10 may thus be regarded as a front end 12 of the leaf spring 10, while the second end 14 may be regarded as a rear end of the leaf spring 10.

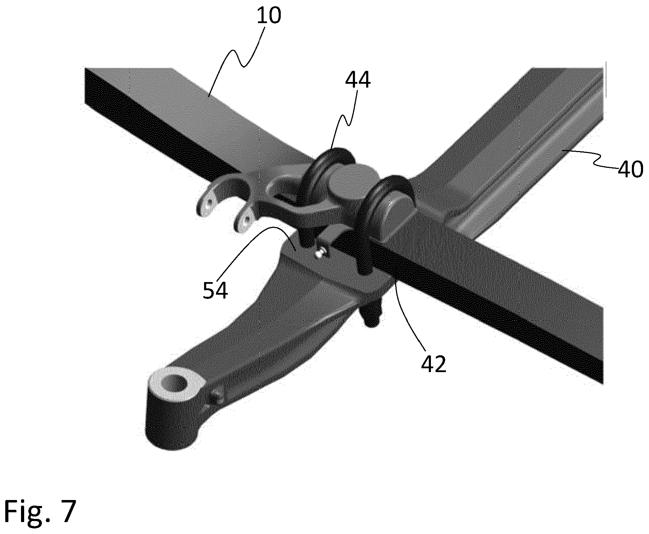

The vehicle suspension 100 further comprises a rigid axle 40 extending transversely of the vehicle frame 18, which axle 40 is mounted to the two leaf springs 10 at an axle attachment portion 42 of the respective leaf spring 10. As shown in the example in Fig. 7, each leaf spring 10 may suitably be fastened/clamped (at each axle attachment portion 42) to the axle 40 by means of brackets or similar. For instance, a pair of U-shaped dowel pins 44 may be placed over the leaf spring 10 to hold down the leaf spring 10, wherein the dowel pins 44 may further extend through bores in the axle 40 and be tightened.

With reference to Figs. 2 and 3, the leaf spring 10 comprises a lower surface 46 configured to face downwardly towards the ground when used in a vehicle suspension. As illustrated, the lower surface 46 may face and be in contact with the axle 40. The leaf spring 10 comprises an upper surface 48 which is located opposite to the lower surface 46 and which is configured to face upwardly when used in a vehicle suspension. As illustrated, the upper surface 48 may face away from the axle 40. The upper surface 48 as well as the lower surface 46 extend longitudinally from the first end 12 to the second end 14 of the leaf spring 10. The axle attachment portion 42 of the leaf spring 10 is located between the first end 12 and the second end 14. The axle attachment portion 42 is configured to be attached to the axle 40 such that the longitudinal extension of the upper surface 48 and lower surface 46 of the leaf spring 10 is directed transversely to main direction of extension of the axle 40.

In Fig. 2 a Cartesian coordinate system (*x, y, z*) is illustrated. The x-axis corresponds to the longitudinal direction of the vehicle. The x-axis may also be referred to as the roll axis. The longitudinal extensions of the leaf springs 10 in Fig. 2 are substantially parallel to the roll axis. The y-axis may also be referred to as the pitch axis. The longitudinal extension (i.e. the main direction of extension) of the axle 40 is substantially parallel with the pitch axis. The z-axis may also be referred to as the yaw axis. The upper surface 48 of the leaf spring 10 is thus intended to be separated from the lower surface 46 of the leaf spring 10 along the z-axis (more specifically along a direction parallel to the z-axis).

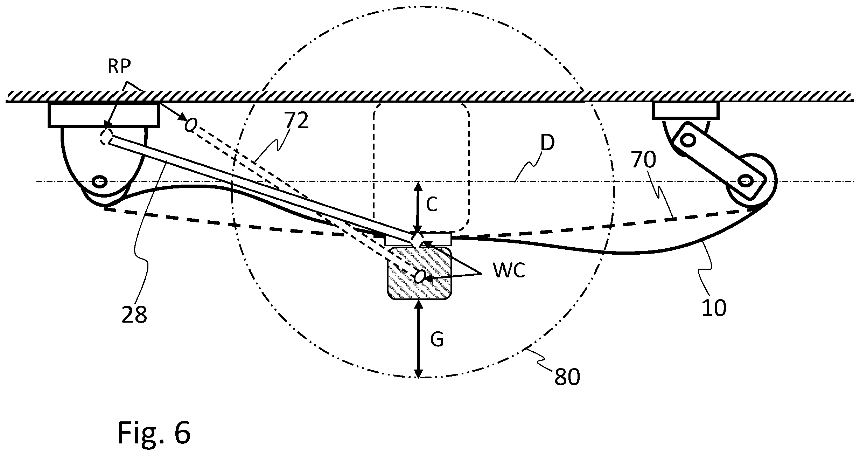

As best seen in Fig. 3, the leaf spring 10 comprises a first upwardly facing convex portion 50 formed between the first end 12 of the leaf spring 10 and the axle attachment portion 42 of the leaf spring 10. The first upwardly facing convex portion 50 can be seen to bulge upwardly (i.e. bulge upwardly in a direction parallel with the z-axis). The leaf spring 10 also comprises a second upwardly facing concave portion 52 formed between the axle attachment portion 42 and the second end 14. This second upwardly facing concave portion 52 can be seen as a downwardly projecting bulge, i.e. bulging in the opposite direction compared to the first upwardly facing convex portion 50 in relation to the z-axis. As will later be discussed in connection with Fig. 6, such a combination of a first upwardly facing convex portion 50 and a second upwardly facing concave portion 52 allows for the wind-up centre to be at a higher level (as seen in relation to the z-axis) compared to known leaf springs, even if the distance to the datum line is increased. This allows for improved handling properties.

From the previous discussion, as well as from the drawings, it can be understood that according to at least some exemplary embodiments, the longitudinal extension of the leaf spring 10 may follow an S-shaped path. In more general terms, in accordance with at least some exemplary embodiments, the leaf spring 10 is S-shaped.

Continuing with Figs. 2 and 3, the axle attachment portion 42 may suitably be the thickest portion of the leaf spring 10. Furthermore, at the axle attachment portion 42 the lower side 46 of the leaf spring 10 may suitably be substantially flat/planar in order to mate with a similarly flat/planar plate portion 54 (see Fig. 7) of the axle 40.

As shown in Fig. 3, the second upwardly facing concave portion 52 is formed by a first subportion 56, which extends downwardly from the axle attachment portion 42 to a lowest point 58 of the second upwardly facing concave portion 52, and a second subportion 60 which extends upwardly from said lowest point 58 to the second end 14. As can be seen in Fig. 3, the lowest point 58 represents a global minimum of the leaf spring 10. In contrast, there is a highest point 62, i.e. a global maximum of the leaf spring 10, formed by the first upwardly facing convex portion 50.

As can be seen in Fig. 3, the second subportion 60 has a steeper slope from said lowest point 58 to the second end 14 compared to the slope of the first subportion 56 from the lowest point 58 to the axle attachment portion 42. Hereby, a shorter offset is obtainable between the second end eye 24 and the vehicle frame 18. This in turn allows the shackle 22, which is configured to engage the second end eye 24, to be made smaller and therefore the second bracket 26 to which the shackle 22 is attachable can be made lighter. Furthermore, the extension of the second subportion 60 forms, according to the invention, a curved path from said lowest point 58 to the second end 14, wherein the smallest radius of curvature of the second subportion 60 is smaller than any radius of curvature of the first subportion 56.

As mentioned previously, the first end 12 comprises a first end eye 20 and the second end 14 comprises a second end eye 24. The shortest distance between the first end eye 20 and the second end eye 24 defines a geometrical datum line D. The datum line D is thus understood to extend substantially in parallel with the x-axis (roll axis). An intermediate point on the datum line D is separated from the centre of the axle attachment portion by a distance C, which is the shortest distance between the centre of the axle attachment portion 42 and the datum line D. The first end eye 20 is separated from the intermediate point by a predetermined first length A along said datum line D. The second end eye 24 is separated from the intermediate point by a predetermined second length B along said datum line D. The relationship between said distance C, said predetermined first length A, and said predetermined second length B may suitably be C > (A+B)/X where X is 80, suitably 30, more suitably 15.

In Fig. 3 there is indicated a first straight imaginary geometrical line E drawn between the end points of the first upwardly facing convex portion 50, from the first end 12 to the axle attachment portion 42. Perpendicularly to this first straight imaginary geometrical line E the largest distance a between the first straight imaginary geometrical line E and the first upwardly facing convex portion 50 may be defined as a > A/Y where Y is 80, suitably 30, more suitably 20. The largest distance a extends to a point on the first upwardly facing convex portion 50 which may coincide with the previously mentioned highest point 62 (global maximum).

In Fig. 3 there is also indicated a second straight imaginary geometrical line F drawn between the end points of the second upwardly facing concave portion 58, from the second end 14 to the axle attachment portion 42. Perpendicularly to this second straight imaginary geometrical line F the largest distance b between the second straight imaginary geometrical line F and the second upwardly facing concave portion 60 may be defined as *b >* B/Z wherein Z is 80, suitably 30, more suitably 20. The largest distance b extends to a point on the second upwardly facing concave portion 60 which may coincide with the previously mentioned lowest point 58 (global minimum).

Fig. 3 also indicates that the vehicle suspension 100 may optionally include an air spring 64, such as an air bellow extending between the leaf spring 10 and the vehicle frame 18. It should be understood that on the one hand, it may be desirable to reduce the spacing between the datum line D and the vehicle frame 18 as that will allow a reduction of the size, and thus the weight, of the first and second brackets 16, 26 and reduce reaction forces in the vehicle frame 18. On the one hand, to increase the packaging space for the air spring 64, it may be desirable to increase the distance C. Increasing the distance C also allows for increased wheel motion and improved comfort.

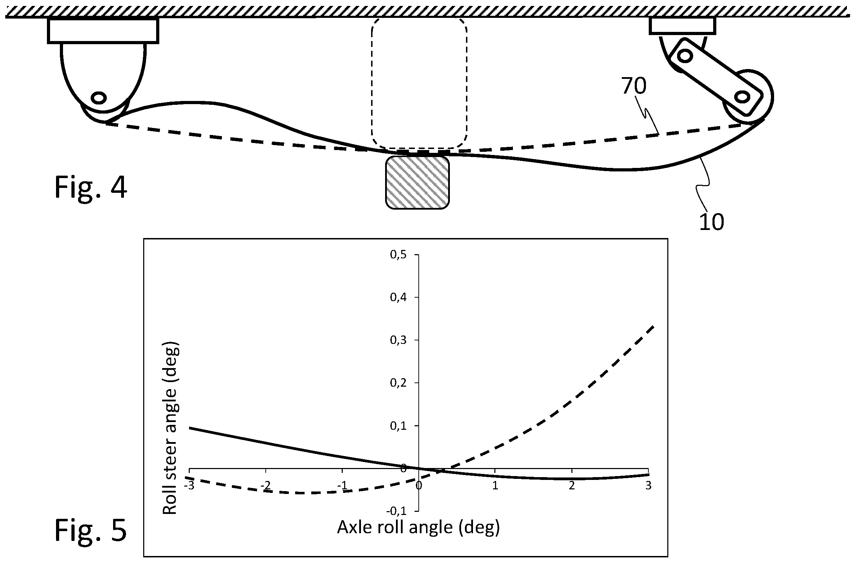

Fig. 4 is a schematic comparison between the leaf spring 10 in Fig. 3 and a conventional leaf spring 70. Thus, in Fig. 4, the leaf spring 10 of Fig. 3 is shown in solid line. The extension of a conventional U-shaped leaf spring 70 is shown in dashed line.

Fig. 5 is a schematic diagram for the two leaf springs 10, 70 in Fig. 4, indicating the roll steer angle over axle roll angle for a vehicle subjected to vertical roll. Vertical roll implies that the vehicle is not subjected to a side force. This type of loading is caused by so-called "bump-steer" when one of the wheels on a rigid axle is deflected upwards by an obstacle such as a ridge or a rock on the road surface. The roll steer angle in the diagram is the average roll steer angle for the left and right wheels. As can be seen from the solid line, representing the roll steering when using a leaf spring 10 of an exemplary embodiment of the present disclosure (such as the one in Fig. 3), even a relatively large axle roll angle will have a negligible effect on the roll steer angle. This can be compared to the roll steer behaviour of a conventional under-bent leaf spring 70, as indicated by the dashed line in Fig. 5. The diagram indicates that the leaf spring 10 according to the present disclosure will cause increased under-steer which gives an improved steering feel for the driver when driving across an uneven surface.

Fig. 6 is another schematic comparison between the leaf spring 10 in Fig. 3 and said conventional leaf spring 70. Thus, Fig. 6 is based on Fig. 4, showing a comparison between two leaf springs 10, 70, namely a leaf spring 10 in accordance with the teachings of the present disclosure (solid line) and a conventional U-shaped leaf spring 70 (dashed line).

Fig. 6 also indicates the respective wind-up centre, WC, for the two leaf springs 10, 70, and the respective Ross point, RP, for the two leaf springs 10, 70. The wind-up centre, WC, is an imaginary point standing relatively still during a braking manoeuvre. The Ross point, RP, is an imaginary point in space about which a leaf spring under vertical load will arc. The imaginary line between the Ross point and the wind-up centre is referred to as the Ross line. The angle between the Ross line and the datum line D is referred to as the Ross angle.

Good handling characteristics are generally reached when the drag link 28 is connected between the Ross point, RP, and the wind-up centre, WC, i.e. the Ross line should suitably match the extension of the drag link. It is therefore desirable to have the steering gear with the pitman arm at the Ross point, RP, and the steering arm at the wind-up centre, WC.

With the conventional U-shaped leaf blade 70 it is difficult to position the steering gear (close to the Ross point, RP) and the steering arm (close to the wind-up centre, WC) because of packing limitations. Even if you succeed in positioning the conventional U-shaped leaf blade 70 with respect to the Ross point, RP, and the wind-up centre, WC, the shorter Ross line and larger Ross angle (cf. indicated dashed drag link/Ross line 72) will have negative impact on handling characteristics compared to the handling characteristics of the leaf spring 10 (solid line) of the present disclosure.

As can be seen in Fig. 6, the shape of the leaf spring 10 of the present disclosure results in a longer Ross line and a smaller Ross angle, thereby making the steering support less sensitive (smaller angular motion during vertical spring travel). Furthermore, the position of the wind-up centre, WC, is close to the leaf spring centre which makes it possible to use the steering arm geometry with clearance to the axle. This makes it possible to reduce axle offset with good axle ground clearance (i.e. corresponding to the vertical distance G to the tire circle 80 indicated by the dash-dotted circle in Fig. 6). The shape of the leaf spring 10 also creates good and stable understeering level together with reduced low level unwanted steering effects like bump and brake steer.

Furthermore, although only a conventional U-shaped leaf spring 70 has been indicated in Fig. 6, some comments may also be made with respect to the previously mentioned leaf spring in US 8,967,645 B2. That prior art leaf spring will not work satisfactorily if the distance C is made larger, which as explained above is desirable. The substantially S-shaped leaf spring 10 of the present disclosure will, however, give good handling properties even with a larger distance C, as its wind-up centre, WC, and Ross point, RP, will be in good design space positions. By combining an over-bent front (first upwardly facing convex portion) and an under-bent rear (second upwardly facing concave portion), the distance C can be allowed to be made larger than in the prior art leaf spring.

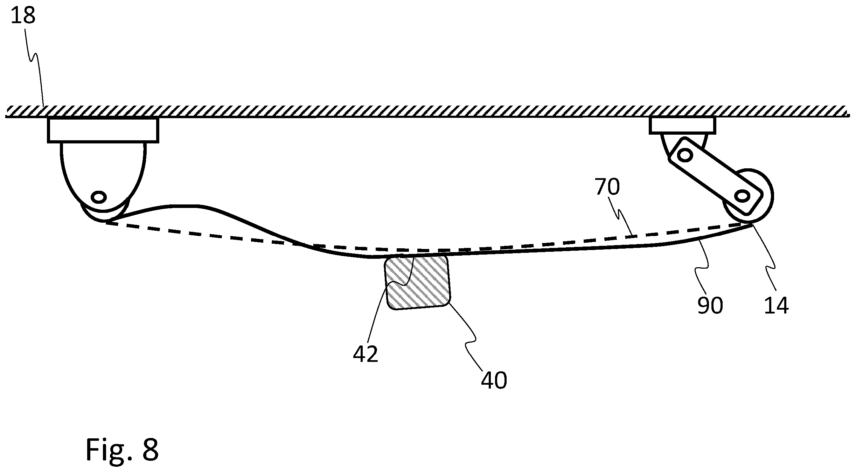

Fig. 8 is a schematic comparison between a leaf spring 90 according to a non-claimed example and a conventional leaf spring 70. Similarly to Fig. 4, in Fig. 8 the conventional leaf spring 70 is shown in dashed line, while the leaf spring 90 of the present embodiment is shown in sold line. In contrast to Fig. 4, in Fig. 8 the second upwardly facing concave portion of the leaf spring does not have a first subportion which extends downwardly from the axle attachment portion 42. Rather, in Fig. 8, the second upwardly facing concave portion extends upwardly from the axle attachment portion 42 to the second end 14. Furthermore, as indicated in Fig. 8, the axle 40 may be slightly tilted relative to the ground and the vehicle frame 18. In particular, the axle 40 may be slightly tilted relative to the pitch axis, such that the axle attachment portion 42 is inclined upwardly in a direction towards the second end 14. It should be understood that the dimensions a, b, A, B and C and their relationships discussed in connection with Fig. 3 may suitably also be implemented for the non-claimed example of Fig. 8.

## Claims

1. A leaf spring (10, 90) for use in a vehicle suspension (100), comprising:
- a lower surface (46) configured to face downwardly towards the ground when used in a vehicle suspension,
- an upper surface (48) which is located opposite to the lower surface and which is configured to face upwardly when used in a vehicle suspension,
- a first end (12) configured to be mounted closer to a front end of a vehicle,
- a second end (14) configured to be mounted closer to a rear end of the vehicle, wherein the upper surface and the lower surface extend longitudinally from the first end to the second end,
- an axle attachment portion (42) located between the first end and the second end, the axle attachment portion being configured to be attached to an axle (40) such that the longitudinal extension of the upper and lower surface of the leaf spring is directed transversely to the axle,
- a first upwardly facing convex portion (50) formed between the first end and the axle attachment portion, and
- a second upwardly facing concave portion (52) formed between the axle attachment portion and the second end,
wherein the second upwardly facing concave portion (52) is formed by:
- a first subportion (56), which extends downwardly from the axle attachment portion (42) to a lowest point (58) of the second upwardly facing concave portion, and
- a second subportion (60) which extends upwardly from said lowest point (58) to the second end (14),
wherein the extension of the second subportion (60) forms a curved path from said lowest point (58) to the second end (14), **characterized in that** the smallest radius of said curvature is smaller than any radius of curvature of the first subportion (56).

2. The leaf spring (10, 90) according to claim 1, wherein the axle attachment portion (42) is the thickest portion of the leaf spring.

3. The leaf spring (10) according to any one of claims 1-2, wherein the second subportion (60) has a steeper slope from said lowest point (58) to the second end (14) compared to the slope of the first subportion (56) from the lowest point (58) to the axle attachment portion (42).

4. The leaf spring (10, 90) according to any one of claims 1-3, wherein the first end (12) comprises a first end eye (20) and the second end (14) comprises a second end eye (24), wherein the shortest distance between said first and second end eyes defines a geometrical datum line (D), wherein
- an intermediate point on the datum line is separated from the centre of the axle attachment portion (42) by a distance C, which is the shortest distance between the centre of the axle attachment portion and the datum line (D),
- the first end eye (20) is separated from said intermediate point by a predetermined first length A along said datum line (D),
- the second end eye (24) is separated from said intermediate point by a predetermined second length B along said datum line (D).

5. The leaf spring (10, 90) according to claim 4, wherein the relationship between said distance C, said predetermined first length A, and said predetermined second length B is: C > (A+B)/X where X is 80, 30, or 15.

6. The leaf spring (10, 90) according to any one of claims 4-5, wherein a first straight imaginary geometrical line (E) is drawable between the end points of the first upwardly facing convex portion (50), from the first end (12) to the axle attachment portion (42), wherein perpendicularly to the first straight imaginary geometrical line (E) the largest distance a between the first straight imaginary geometrical line (E) and the first upwardly facing convex portion (50) is defined as:
*a* > A/Y where Y is 80, 30, or 20.

7. The leaf spring (10, 90) according to any one of claims 4-6, wherein a second straight imaginary geometrical line (F) is drawable between the end points of the second upwardly facing concave portion (52), from the second end (14) to the axle attachment portion (42), wherein perpendicularly to the second straight imaginary geometrical line (F) the largest distance *b* between the second straight imaginary geometrical line (F) and the second upwardly facing concave portion (52) is defined as *b* > B/Z wherein Z is 80, 30, or 20.

8. A vehicle suspension (100), comprising a leaf spring (10, 90) according to any one of claims 1-7.

9. The vehicle suspension (100) according to claim 8, comprising:
- a first bracket (16) configured to be attached rigidly to a vehicle frame (18) at a first frame position,
- a second bracket (26) configured to be attached rigidly to the vehicle frame at a second frame position,
- a shackle (22) pivotally connected to the second bracket,
wherein the first end (12) of the leaf spring (10, 90) is connected to the first bracket and the second end (14) of the leaf spring is connected to the shackle in order to compensate for length changes of the leaf spring under load conditions.

10. The vehicle suspension (100) according to any one of claims 8-9, wherein said leaf spring (10, 90) is a first leaf spring, the vehicle suspension further comprising:
- a second leaf spring according to any one of claims 1-7, and
- an axle (40) configured to extend transversely of the vehicle frame (18), which axle is mounted to the two leaf springs at said axle attachment portion (42) of the respective leaf spring.

11. A vehicle (1) comprising a leaf spring (10, 90) according to any one of claims 1-7 or a vehicle suspension (100) according to any one of claims 8-10.

## Patentansprüche

1. Blattfeder (10, 90) zur Verwendung in einer Fahrzeugaufhängung (100), umfassend:
- eine untere Fläche (46), die dazu konfiguriert ist, nach unten in Richtung des Bodens gewandt zu sein, wenn sie in einer Fahrzeugaufhängung verwendet wird,
- eine obere Fläche (48), die sich gegenüber der unteren Fläche befindet und die dazu konfiguriert ist, nach oben gewandt zu sein, wenn sie in einer Fahrzeugaufhängung verwendet wird,
- ein erstes Ende (12), das dazu konfiguriert ist, näher an einem vorderen Ende eines Fahrzeugs montiert zu sein,
- ein zweites Ende (14), das dazu konfiguriert ist, näher an einem hinteren Ende des Fahrzeugs montiert zu sein,
wobei sich die obere Fläche und die untere Fläche in Längsrichtung von dem ersten Ende zu dem zweiten Ende erstrecken,
- einen Achsenanbringungsabschnitt (42), der sich zwischen dem ersten Ende und dem zweiten Ende befindet, wobei der Achsenanbringungsabschnitt dazu konfiguriert ist, an einer Achse (40) derart angebracht zu sein, dass die Längserstreckung der oberen und der unteren Fläche der Blattfeder quer zu der Achse gerichtet ist,
- einen ersten nach oben gewandten konvexen Abschnitt (50), der zwischen dem ersten Ende und dem Achsenanbringungsabschnitt gebildet ist, und
- einen zweiten nach oben gewandten konkaven Abschnitt (52), der zwischen dem Achsenanbringungsabschnitt und dem zweiten Ende gebildet ist,
wobei der zweite nach oben gewandte konkave Abschnitt (52) durch Folgendes gebildet ist:
- einen ersten Teilabschnitt (56), der sich von dem Achsenanbringungsabschnitt (42) nach unten zu einem untersten Punkt (58) des zweiten nach oben gewandeten konkaven Abschnitts erstreckt, und
- einen zweiten Teilabschnitt (60), der sich von dem untersten Punkt (58) nach oben zu dem zweiten Ende (14) erstreckt,
wobei die Erstreckung des zweiten Teilabschnitts (60) einen gekrümmten Pfad von dem untersten Punkt (58) zu dem zweiten Ende (14) bildet, **dadurch gekennzeichnet, dass** der kleinste Radius der Krümmung kleiner ist als ein beliebiger Radius der Krümmung des ersten Teilabschnitts (56).

2. Blattfeder (10, 90) nach Anspruch 1, wobei der Achsenanbringungsabschnitt (42) der dickste Abschnitt der Blattfeder ist.

3. Blattfeder (10) nach einem der Ansprüche 1-2, wobei der zweite Teilabschnitt (60) einen steileren Anstieg von dem untersten Punkt (58) zu dem zweiten Ende (14) im Vergleich zu dem Anstieg des ersten Teilabschnitts (56) von dem untersten Punkt (58) zu dem Achsenanbringungsabschnitt (42) aufweist.

4. Blattfeder (10, 90) nach einem der Ansprüche 1-3, wobei das erste Ende (12) eine erste Endöse (20) umfasst und das zweite Ende (14) eine zweite Endöse (24) umfasst, wobei der kürzeste Abstand zwischen der ersten und der zweiten Endöse eine geometrische Bezugslinie (D) definiert, wobei
- ein Zwischenpunkt auf der Bezugslinie von der Mitte des Achsenanbringungsabschnitts (42) durch einen Abstand C getrennt ist, bei dem es sich um den kürzesten Abstand zwischen der Mitte des Achsenanbringungsabschnitts und der Bezugslinie (D) handelt,
- die erste Endöse (20) von dem Zwischenpunkt durch eine vorbestimmte erste Länge A entlang der Bezugslinie (D) getrennt ist,
- die zweite Endöse (24) von dem Zwischenpunkt durch eine vorbestimmte zweite Länge B entlang der Bezugslinie (D) getrennt ist.

5. Blattfeder (10, 90) nach Anspruch 4, wobei die Beziehung zwischen dem Abstand C, der vorbestimmten ersten Länge A und der vorbestimmten zweiten Länge B die Folgende ist:
C>(A+B)/X, wobei X 80, 30 oder 15 ist.

6. Blattfeder (10, 90) nach einem der Ansprüche 4-5, wobei eine erste gerade imaginäre geometrische Linie (E) zwischen den Endpunkten des ersten nach oben gewandten konvexen Abschnitts (50) von dem ersten Ende (12) zu dem Achsenanbringungsabschnitt (42) zeichenbar ist, wobei senkrecht zu der ersten geraden imaginären geometrischen Linie (E) der größte Abstand a zwischen der ersten geraden imaginären geometrischen Linie (E) und dem ersten nach oben gewandten konvexen Abschnitt (50) definiert ist als:
*a* > A/Y, wobei Y 80, 30 oder 20 ist.

7. Blattfeder (10, 90) nach einem der Ansprüche 4-6, wobei eine zweite gerade imaginäre geometrische Linie (F) zwischen den Endpunkten des zweiten nach oben gewandten konkaven Abschnitts (52) von dem zweiten Ende (14) zu dem Achsenanbringungsabschnitt (42) zeichenbar ist, wobei senkrecht zu der zweiten geraden imaginären geometrischen Linie (F) der größte Abstand *b* zwischen der zweiten geraden imaginären geometrischen Linie (F) und dem zweiten nach oben gewandten konkaven Abschnitt (52) als *b* > B/Z definiert ist, wobei Z 80, 30 oder 20 ist.

8. Fahrzeugaufhängung (100), umfassend eine Blattfeder (10, 90) nach einem der Ansprüche 1-7.

9. Fahrzeugaufhängung (100) nach Anspruch 8, umfassend:
- eine erste Halterung (16), die dazu konfiguriert ist, fest an einem Fahrzeugrahmen (18) an einer ersten Rahmenposition angebracht zu sein,
- eine zweite Halterung (26), die dazu konfiguriert ist, fest an dem Fahrzeugrahmen an einer zweiten Rahmenposition angebracht zu sein,
- einen Bügel (22), der schwenkbar mit der zweiten Halterung verbunden ist,
wobei das erste Ende (12) der Blattfeder (10, 90) mit der ersten Halterung verbunden ist und das zweite Ende (14) der Blattfeder mit dem Bügel verbunden ist, um Längenänderungen der Blattfeder unter Belastungsbedingungen auszugleichen.

10. Fahrzeugaufhängung (100) nach einem der Ansprüche 8-9, wobei die Blattfeder (10, 90) eine erste Blattfeder ist, wobei die Fahrzeugaufhängung ferner Folgendes umfasst:
- eine zweite Blattfeder nach einem der Ansprüche 1-7 und
- eine Achse (40), die dazu konfiguriert ist, sich quer zu dem Fahrzeugrahmen (18) zu erstrecken, wobei die Achse an den zwei Blattfedern an dem Achsenanbringungsabschnitt (42) der jeweiligen Blattfeder montiert ist.

11. Fahrzeug (1), umfassend eine Blattfeder (10, 90) nach einem der Ansprüche 1-7 oder eine Fahrzeugaufhängung (100) nach einem der Ansprüche 8-10.

## Revendications

1. Ressort à lames (10, 90) destiné à être utilisé dans la suspension d'un véhicule (100), comprenant :
- une surface inférieure (46) configurée pour être orientée vers le sol lorsqu'elle est utilisée dans la suspension d'un véhicule,
- une surface supérieure (48) située à l'opposé de la surface inférieure et configurée pour être orientée vers le haut lorsqu'elle est utilisée dans la suspension d'un véhicule,
- une première extrémité (12) configurée pour être montée plus près de l'avant d'un véhicule,
- une seconde extrémité (14) configurée pour être montée plus près de l'arrière du véhicule,
dans lequel la surface supérieure et la surface inférieure s'étendent longitudinalement de la première à la seconde extrémité,
- une partie de fixation à l'essieu (42) située entre la première et la seconde extrémité, la partie de fixation à l'essieu étant configurée pour être fixée à un essieu (40) de sorte que l'extension longitudinale des surfaces supérieure et inférieure du ressort à lames soit orientée transversalement par rapport à l'essieu,
- une première partie convexe (50) orientée vers le haut, formée entre la première extrémité et la partie de fixation à l'essieu, et
- une seconde partie concave (52) orientée vers le haut, formée entre la partie de fixation à l'essieu et la seconde extrémité,
dans lequel la seconde partie concave (52) orientée vers le haut est formée par :
- une première sous-partie (56) qui s'étend vers le bas depuis la partie de fixation à l'essieu (42) jusqu'au point le plus bas (58) de la deuxième partie concave orientée vers le haut, et
- une seconde sous-partie (60) qui s'étend vers le haut depuis le point le plus bas (58) jusqu'à la seconde extrémité (14),
dans lequel l'extension de la seconde sous-partie (60) forme une trajectoire courbe depuis le point le plus bas (58) jusqu'à la seconde extrémité (14), **caractérisé en ce que** le plus petit rayon de ladite courbure est inférieur à tout rayon de courbure de la première sous-partie (56).

2. Ressort à lames (10, 90) selon la revendication 1, dans lequel la partie de fixation à l'essieu (42) est la partie la plus épaisse du ressort à lames.

3. Ressort à lames (10) selon l'une quelconque des revendications 1 à 2, dans lequel la seconde sous-partie (60) présente une pente plus forte à partir du point le plus bas (58) à la seconde extrémité (14) par rapport à la pente de la première sous-partie (56) à partir du point le plus bas (58) à la partie de fixation à l'essieu (42).

4. Ressort à lames (10, 90) selon l'une quelconque des revendications 1 à 3, dans lequel la première extrémité (12) comprend un premier anneau d'extrémité (20) et la seconde extrémité (14) comprend un second anneau d'extrémité (24),
dans lequel la distance la plus courte entre les deux extrémités définit une ligne de référence géométrique (D), dans lequel
- un point intermédiaire sur la ligne de référence est séparé du centre de la partie de fixation à l'essieu (42) par une distance C, qui est la distance la plus courte entre le centre de la partie de fixation à l'essieu et la ligne de référence (D),
- le premier anneau d'extrémité (20) est séparé dudit point intermédiaire par une première longueur A prédéterminée le long de ladite ligne de référence (D),
- le second anneau d'extrémité (24) est séparé dudit point intermédiaire par une seconde longueur B prédéterminée le long de ladite ligne de référence (D).

5. Ressort à lame (10, 90) selon la revendication 4, dans lequel la relation entre ladite distance C, ladite première longueur prédéterminée A, et ladite seconde longueur prédéterminée B est :
C > (A+B)/X où X est égal à 80, 30, ou 15.

6. Ressort à lames (10, 90) selon l'une quelconque des revendications 4 à 5, dans lequel une première ligne géométrique imaginaire droite (E) peut être tracée entre les points d'extrémité de la première partie convexe orientée vers le haut (50), depuis la première extrémité (12) jusqu'à la partie de fixation à l'essieu (42),
dans lequel, perpendiculairement à la première ligne géométrique imaginaire droite (E), la plus grande distance a entre la première ligne géométrique imaginaire droite (E) et la première partie convexe orientée vers le haut (50) est définie comme suit :
a > A/Y où Y est égal à 80, 30, ou 20.

7. Ressort à lames (10, 90) selon l'une quelconque des revendications 4 à 6, dans lequel une deuxième ligne géométrique imaginaire droite (F) peut être tracée entre les points d'extrémité de la seconde partie concave orientée vers le haut (52), depuis la seconde extrémité (14) jusqu'à la partie de fixation à l'essieu (42), dans lequel, perpendiculairement à la seconde ligne géométrique imaginaire droite (F), la plus grande distance b entre la seconde ligne géométrique imaginaire droite (F) et la seconde partie concave orientée vers le haut (52) est définie comme b > B/Z, dans lequel Z est égal à 80, 30 ou 20.

8. Suspension de véhicule (100), comprenant un ressort à lames (10, 90) selon l'une quelconque des revendications 1 à 7.

9. Suspension de véhicule (100) selon la revendication 8, comprenant :
- un premier support (16) configuré pour être fixé rigidement à un châssis de véhicule (18) à une première position du châssis,
- un second support (26) configuré pour être fixé rigidement au châssis de véhicule à une seconde position du châssis,
- une manille (22) reliée de manière pivotante au second support,
dans lequel la première extrémité (12) du ressort à lames (10, 90) est reliée au premier support et la seconde extrémité (14) du ressort à lames est reliée à la manille afin de compenser les variations de longueur du ressort à lames sous des conditions de charge.

10. Suspension de véhicule (100) selon l'une quelconque des revendications 8 à 9, dans laquelle ledit ressort à lames (10, 90) est un premier ressort à lames, la suspension de véhicule comprenant en outre :
- un second ressort à lames selon l'une quelconque des revendications 1 à 7, et
- un essieu (40) configuré pour s'étendre transversalement par rapport au châssis de véhicule (18), lequel essieu étant monté sur les deux ressorts à lames au niveau de la partie de fixation à l'essieu (42) du ressort à lames respectif.

11. Véhicule (1) comprenant un ressort à lames (10, 90) selon l'une quelconque des revendications 1 à 7 ou une suspension de véhicule (100) selon l'une quelconque des revendications 8 à 10.
